Europäisches Patentamt

European Patent Office

Office européen des brevets

(19)

(11) **EP 0 810 048 A1**

(12) **EUROPEAN PATENT APPLICATION**
published in accordance with Art. 158(3) EPC

(43) Date of publication:
03.12.1997 Bulletin 1997/49

(21) Application number: 96902210.2

(22) Date of filing: 06.02.1996

(51) Int. Cl.[6]: **B23B 11/00**

(86) International application number:
PCT/CN96/00011

(87) International publication number:
WO 96/24456 (15.08.1996 Gazette 1996/37)

(84) Designated Contracting States:
**CH DE IT LI**

(30) Priority: 06.02.1995 CN 95100746

(71) Applicant: **Shao, Wenyuan**
**Hefei, Anhui 230031 (CN)**

(72) Inventor: **Shao, Wenyuan**
**Hefei, Anhui 230031 (CN)**

(74) Representative:
**Altenburg, Udo, Dipl.-Phys. et al**
**Patent- und Rechtsanwälte,**
**Bardehle . Pagenberg . Dost . Altenburg .**
**Frohwitter . Geissler & Partner,**
**Galileiplatz 1**
**81679 München (DE)**

(54) **A COMPACT MACHINE CENTRE FOR MULTIFUNCTION**

(57)     A compact machine centre for multifunction, positions the required tools or work devices, subsequently, which are arranged in a tool magazine of various models taking the basic form of a frame, said frame can be moved in a plane perpendicular to the spindle axis, to perform tool changing, multi-process transferring and loading or unloading so that a number of complex processes such as turning, drilling, milling, gear hobbling or spur gear shaping, induction hardening, grinding and measuring etc. are finished after the workpiece is clamped once. Replacing several machine centres or a flexible machining system, advantageously, the compact machine centre avoids an accuracy loss caused by repeated clamping as the usual process.

Figur 6

EP 0 810 048 A1

## Description

### Field of The Invention

The present invention pertains to metal cutting machine tool, particularly multifunction machining center able to complete most or all machining processes on one complex work piece during loading and unloading.

### Background of The Invention

British patent application GB2212753 suggested adding power transmission train in the tool turret of NC lathe to drive driven tools of the turret so as to complete turning , drilling, milling once a workpiece is clamped.

In fact,limited by the diameter of the turret and the workpiece, except turning tools, very few driven tools can be holded on the turret. So only few and simple drilling and milling can be performed after turning.

Second,the tool exchange accuracy of a turret depends on high precision of the turret and the tools, this means higher manufacturing cost, and consuming more time in tool adjustment.

Moreover,all driven tools located in a center plane through workpiece axis ,so it is impossible to drill holes or mill faces offsetting the center plane of the workpiece ,like milling a gear using a disc cutter.

In fact, a practical machine component needs a variety of further machining after turning and simple drilling or milling to complete, such as hobbing, shaping, planing, shaving,lapping, grinding for spur or spiral gears, bevel gears, broaching for internal splines or shaped holes surface hardening and grinding for external or internal cylindricals or planes or curved surfaces.

According to above described Patent Applications and conventional technology, a complex practical workpiece can only be machined partly on one machining center, and then is carried by auto delivering means to the next machining centers subsequently till it is finished.

It is very difficult and complicated to relocate and reclamp different unfinished workpiece automatically on the next machining center, and the process management needs several times more time and works than that needed by whole machining, the automatization of this task is still a big difficult object of the present machinery engineering.

### Summary of The Invention

The main object of the present invention is to avoid shortages in above described Patent Applications and conventional technologies, and provide a new composition of multifunction machining center.

The suggested machining center will be small and simple, can arrange enough turning,drilling,milling tools as well various working units like laser machining unit, quenching coil, grinding unit, gear milling, hobbing, shaping, planing unit, broaching unit etc., so that once a workpiece is clamped all rotational surfaces, and all holes, screw holes, slots, cracks, planes, curved surface characters,artistic patterns in arbitrary angles and arbitrary positions ,as well internal or external, spur or helical gear, bevel gear, worm gear, spline cab be machined, then can be added quenching and precise grinding.

To further machine the second end, with the aid of finished axial hole, or taper hole, or spline hole of the workpiece, the workpiece can be fixed automatically on a fixture of the second spindle, this fixture may be premachined on the second spindle automatically according to the finished hole of the workpiece.

In some cases this new designed multifunction machining center can replace a CIMS, which is composed of turning center, machining center, gear cutting machine, laser machining center, grinding center, measuring machine, delivering robot and a computer system.

The above object is realized by following means:

The main method of the present invention is replacing the turret tool exchanger of the conventional turning center by a frame shaped tool magazine, each segments of the frame shaped tool magazine are parallel to the X or Y axis, all the cutters, tools and work units are arranged on the segments of the tool magazine, and adding a guide pair with servodriver to move the frame shaped tool magazine in the direction of Y axis relatively to the work spindle, by the aid of the movements of the frame shaped tool magazine in the X and Y directions relative to the workpiece to perform tool exchanging, feeding and process transferring.

The frame shaped tool magazine may be arranged at least one group of radial fixed tools(external turning tool or planing tool), at least one group of axial fixed tools(internal turning tool or slotting tool), as well one group of rotary tools. each group has at least two tools,the tools in one group are parallel to each other,each group of tools not parallel to the Z axis is aligned the X or Y axis, each group of tools parallel to the Z axis can be aligned in one row or rows, or arranged in the X-Y plane, so that the limited surface of the frame shaped tool magazine can arranged enough tools and cutters, as well different working and cutting units, also the transmission can be simplified.

The frame shaped tool magazine may comprise one segment or several segments which connect each other perpendicularly to form a frame, the frame may be in the shape of I, L, U, Ⰸ, Ⱇ, Ⱨ and so on.

The driven tool shafts parallel to work piece axis can hold drills, borers, reamers, tappers, fingle milling tools, to machine holes, screw holes parallel to work piece or sunken surface on the end face, The driven tool shafts perpendicular to work piece axis can hold drills, borers, reamers, tappers finger milling tools to machine holes, screw holes perpendicular to the workpiece axis, or sunken surfaces on the peripheral, as well hold disc tools such as disc saw, 3 edge milling tool, gear cutting tool to machine cracks, slots, splines, spur gears, bevel gears etc. the driven tool shafts oblique to the workpiece axis can hold tools to machine oblique holes, screw holes, planes, spherical surfaces and helical gears, spiral slots, and to hob gears if an encoder or pulse generator is mounted on some shaft.

A frame shaped tool magazine with full function should have at least one group of rotary tool shafts parallel to Z axis, at least one group of rotary tool shafts perpendicular to Z axis, and at least one group of rotary tool shafts oblique to Z axis, but these rotary tool shafts can be replaced by at least one group of rotary tool shafts arranged on the rotatable multishaft box controlled by a servo driver.

Considering the most drilling or milling after turning for a practical work piece needs tools parallel or perpendicular to workpiece axis, it is reasonable to arrange at least one row of driven tool shaft on the rotatable segment, or arrange at least one row of driven tool shaft perpendicular to workpiece axis and one group of driven tool shaft parallel to workpiece axis on the standing segment of the tool magazine.

The frame shaped tool magazine can have an inducing quenching coil or a lesar nozzle, for hardening workpiece surface automatically after turning, milling or hobbing. So as to further perform precise grinding.

A lesar nozzle can perform more machining ,such as plate cutting, holing, engraving, welding.

A external grinding unit and a intenl grinding unit can be mounted on the rotatable part of the frame shaped tool magazine,for accurately grinding of internal or external, cylindrical or taper surfaces , or planes or shaped surfaces at arbitrary angles. with the synchronizing between Z,X,Y,C axis, cam or complex curved surfaces can also be grinded.The grinding wheel may be dressed linearly or curvedly by a dresser mounted on the headstock .

A gear shaping unit , mainly for internal gear or stepped gear cutting, can beemployed on the standing segment or rotatable multishaft box of the frame shaped tool magazine.

A bevel gear cutting unit can mounted on the rotatable multishaft box, for straight or spiral bevel gear cutting.

A gripper or an outlet of blank feeder can be mounted on the frame shaped tool magazine for short blank loading.

A measuring sensor can be equipped on the frame shaped tool magazine, for measuring dimensions of a finished workpiece, or a trial cut workpiece to check and adjust tool tip position.

Besides, a cutting tool measuring sensor can be equipped on the headstock, it is programmed to measure the edge position of new or using cutters, and then check and adjust the position data of the tips automatically.

For complete the second end of a workpiece, opposite to the main(or first)headstock,a second headstock and a second spindle which coaxial with the main work spindle is settled on the other side of the frame shaped tool magazine .

Another method without using second headstock is to employ a rotatable gripper on the tool magazine , this gripper can grab a unfinished workpiece from work spindle, and reverse to 180 dgree, then return the workpiece to the work spindle, let it reclamped.

Furthermore, a broaching unit and a broach cycle mechanism is attached on the bed or tool magazine for broaching some precise shaped hole (like internal spline) during machining processes.

Description of The Drawing

Fig 1 shows a single spindle turning milling center, there is only one row of driven tool tool shaft on its tool magazine.

Fig 2 shows a single spindle turning milling center with a frame shaped tool magazine arranged driven tool shafts parallel to workpiece axis and driven tool shafts perpendicular to workpiece axis.

Fig.3A shows a frame shaped tool magazine employing shaft-reducer-motor sets.

Fig.3B shows another frame shaped tool magazine with both axial and radial driven tool shafts and rotatable mulishaft box.

Fig.4 shows a frame shaped tool magazine with rotatable multishaft box driven by an A axis servodriver.

Fig.5 is a front view and a top view of a double spindle turning milling center .

Fig.6 is a front view and a side cross-sectional view of a double spindle multifunction machining center.

Fig.7 shows a frame shaped tool magazine and the broaching unit employed in the embodiment shown in Fig.6.

Fig.8 shows the gear shaping unit and the bevel gear planing attachment.

Fig.9 shown a first alternate of the frame shaped tool magazine shown in Fig. 7.

Fig. 10 shows a second alternate of the frame shaped tool magazine shown in Fig. 7.

Fig.11 is a front view and a side view of a turning milling center suitable for long workpiece.

Fig. 12 is a front view and a side view of a double spindle turning milling center with sub workspindle on its ram.

Detailed Description of the Preferred Embodiment

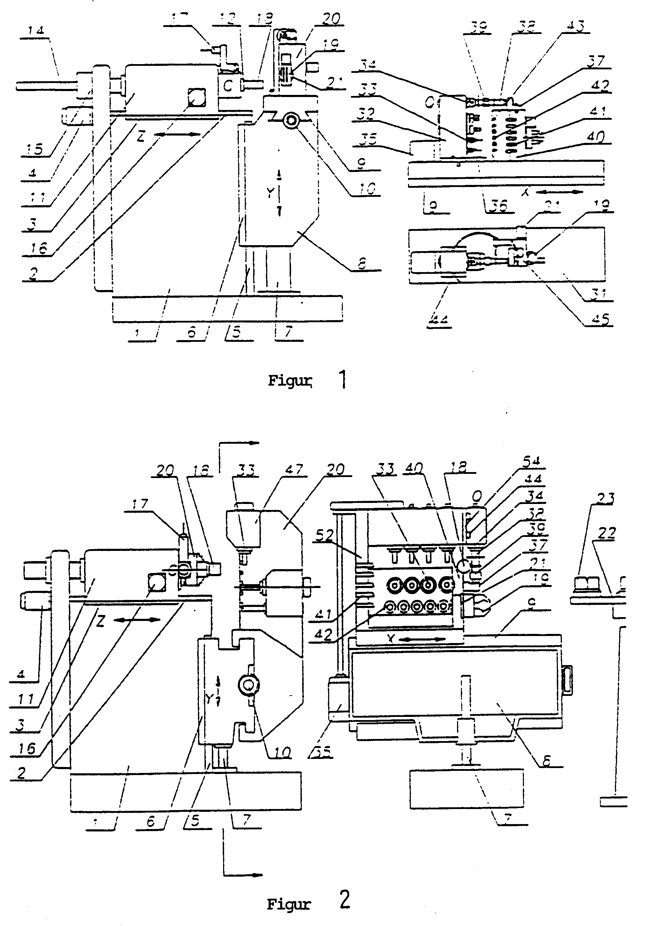

Fig. 1 shows a turning milling center with simplest frame shaped tool magazine.

In Fig.1, bed (1) has a vertical Y guide rail (5) on its front, and a horizontal Z guide rail (2) on the top of it. The headstock (11) has a guide surface (3) on its bottom, and can slides on the Z guide rail (2) on the bed(1), the locating and movement of the headstock(11) are controlled by a Z axis servodriver(4).

Work spindle is rotatably held by the headstock. In turning operation, the work spindle is driven directly or through transmission by a main motor. In drilling or milling operation, the work spindle is coupled with and driven by a C axis index servodriver(16).

The work spindle may be coupled with a C' axis encoder, to decide rotary angle, or to cut screwthread.

Another method of C axis controls, is combining the main motor and the C' axis encoder, without an independent index servodriver(16).

At the back of the work spindle(12) a bar feeder(15) is equipped for automatical loading, the alternate of the bar feeder is a gripper(19), it can draw out the bar from spindle automatically. (20) Is a frame shaped tool magazine. It has an X axis guide rail(9) under its bottom, can slide on the top X guide surface of the Y-X slider(8),and is controlled by an X axis servodriver(10) to move and locate.

The Y-X slider has a Y guide surface perpendicular to the X guide surface on its front, can slide on the Y guide rail(5) of the bed (1), with movement and location in Y direction controlled by a Y axis servodriver(7).

A tool measuring sensor(17) is equipped on the headstock(11). It can turn round a pivot (or stretch out or retract back). During machining it is in a position avoiding conflict with the tools and while measuring it turns back (or stretch out) to measuring position.

This action may be driven by a hydraulic cylinder, or a pneumatic cylinder, or an electric motor. The sensor(17) can find the accuracy position of cutter edges, so that the tool holding and tool pre-adjusting process can be simplified.

Above servodrivers for linear movement may comprise feed screw means and stepmotor or servomotor with feedback device, the C axis index servodriver may comprise a worm gear pair and a step motor or a servo motor with feedback device.

The guide rails and the guide surfaces mentioned above may be common slide guide pair with or without plastic surface, or hydrostatic guide pair, or rolling guide pair.

The right side of Fig. 1 shows the frame shaped tool magazine(20).

The frame shaped tool magazine in this embodiment is in the shape of "U", the lower segment(31) has an X guide rail on its bottom, and a circle T slot on its top, the right segment(40)is fixed on the top of the lower segment(31). And the left segment is a rotatable multi-shaft box (32), one row of 5 driven tool shafts(33) is arranged on it, these 5 shafts are driven by one motor (35), and the speeds of each shaft are reduced from bottom to top step by step.

These shafts can hold drill, tap, reamer, borer or finger milling tool etc., and the top shaft(34) can hold a long arbor(38), on which, 1 to 4 disc milling tools, like disc saw, 3 edges cutter, gear tooth cutter, angle slot cutter and gear hobber can be held, so that slots, seams, planes, external spline, spur gear, bevel gear can be machined on the workpiece. In order to perform hobbing operation, a Q axis encoder is mounted on or coupled with tool shaft (34). The multi-shaft box (32) can swivel round a pivot(36),so as to machine some holes or faces oblique to Z axis, or mill helical gear, hob gear or worm guar. (37)is a bearing holder for long arbor supporting, it can be fastened by the T slot on the top of right segment(40). The swivel angle of the multi-shaft box(32)is indicated by an angle indicator(54).

Right segment (40) is a turning tool post, one row of 7 radial fixed tools(41) such as external turning tools, planing tool,smoothing roll, knurl wheel, honing tool etc., and one row of 6 axial fixed tools(42) such as internal turning tool, drill, reamer, tapper, screw die and slotting cutter is arranged. (43) Is a sensor for workpiece measuring.

This embodiment is suitable for both bar and short blank. In order to load or unload short blank automatically, a loading and reversing gripper(19)is employed on the frame shaped tool magazine. When loading, first the gripper moves in X-Y plane to grab a blank in the blank feeder, then moves to aim the workspindle, third the workspindle opens its chuck, moves in Z direction to the workpiece, and then clamps the workpiece, forth the gripper(19) opens its jaws and moves out. This gripper can also grab a one end finished workpiece,then reverse it to 180 degree, and let it reclamped by spindle chuck to continue its second end machining. But this is suitable only to short blank.

This gripper can also grab and carry finished workpiece from workspindle to outlet.

This gripper is assembled with at least two pairs of jaws, each pair is driven by an independent hydraulic cylinder, so as to grab a step or tapper blank, and the jaws of each pair move oppositely syncromeshly and symmetrically, to ensure the axis of the grasped workpiece is uniform, when different sized workpiece is grasped.

The gripper(19)is mounted on a rotating mechanism(21), the rotating mechanism(21) is driven by a hydraulic cylinder ,or pneumatic cylinder or electric motor, to reverse the grasped work piece at 180 degree accurately.

In the condition of without conflicting between tools and the workpiece, the parallel arrangement of tools takes rather small space.

The outline of the frame shaped tool magazine is mainly depend upon the number of arranged shafts and the distance between two neighboring tools, the distance S1 is concerned with the maximum diameter of workpiece and the average diameter of the cutting tools, generally, $S1=D+d+\delta 1$, $\delta 1$ is a sum of two gaps between workpiece and two tools when the workpiece is inside the two tools. So when designing the tools may be arranged in different distance, the distance between shafts holding high speed small tools should be smaller,and the distance between shafts holding low speed large tools should be larger. For example, when $D=60mm$, $d=20mm$, $\delta 1=5mm$, $S1=85mm$.

Parallel arrangement for a plurality of fixed radical tool has highest space efficiency.

The first method for fixed radical tool arrangement is aligning tools in the direction perpendicular to the direction of tool radial feeding.In that time, the minimum distance of two tools should be $S2=D/2+B+\delta 2$, B is a thickness of the tool, $\delta 2$ is a gap between work piece and the second tool when the first tool is in cutting. For example, D=60mm,B=15mm, $\delta 2$=5mm, S2=50mm.

If the fixed radial tools must be arranged horizontally, the above method will cause inconvenience to observe the tools. For convenient observation,the second method can be employed, that is aligning a plurality of oblique standing prism tools paralleled.

The top of the prism tools is made a rake, the oblique angles forms clearance, or a tip can be mounted on the top of the prism tools, their radial feeding direction is horizontal, such arranged the tools will be convenient to be observed and to have their tip changed or grinded.

In this case, the minimum distance between two tools is: $S3=D+B+\delta 2$, for example, D=60mm, B=15mm, $\delta 2$=5mm,S3=80mm.

In order to arrange more tools horizontally in a limited space the third method can be considered, that is each pair of hack to back obliquely standing prism tools like a "V" on the tool post, or each pair of tips fixed back to back on the top of a standing bar, and several such tool pairs are aligned on the tool magazine.

At that time, the space between two tools back to back is $S4=D/2+B+\delta 2$,the space between two tools face to face is $S5=D+\delta 2$, and average distance between two tools is $S6=(1.5D+B+2\delta 2)/2$. In the same condition as above example, S3=60mm.

The driven tool shafts in the frame shaped tool magazine shown in Fig. 1, can be driven by single speed-controllable motor through a transmission Another method is each tool shaft driven by a motor via a reducer. And a suggestion is to produce shaft-reducer-motor set in standard outer size.

The shortage of the turning milling center shown in Fig. 1 is it can only choose one of following status to work: a, the driven tools perpendicular to work spindle, b, the driven tools parallel to the work spindle, c,the driven tools oblique to the work spindle. So is only fit for simple work piece.

Considering a majority of drilling or milling for a practical machine part after turning needs tools parallel or perpendicular to work piece axis, the embodiment shown in Fig. 2 employs a '日' shaped tool magazine. The upper segment (47) of the tool magazine is arranged one row of 4 driven tool shafts perpendicular to work piece axis, the middle segment of the tool magazine is arranged one row of 4 driven tool shafts parallel to work piece axis, so holes and surfaces on work piece which need tools perpendicular or parallel to work piece axis can be completed once. Furthermore a rotatable part that can rotates about A axis with a tool shaft(34)is attached on the right end of the upper segment(47). The tool shaft(34) can hold a long arbor(38), which can hold hobbing tool, disk milling tool to hob gear or mill slot etc. . Besides, the left segment is arranged one row of 5 radial fixed tools (41) along Y axis, the middle segment is arranged one row of 5 axial fixed tools(42)(slotting tool may be included) along X axis on its lower border. An electric motor(35)is fixed on the lower of the frame shaped tool magazine so that large power may be supplied. Because the gripper(19)is rotatable, a horizontal disc work piece bank (22) can be employed. The blanks with the shape of cylindrical or taper or step stand on the disc work piece bank, and are grasped vertically by gripper(19),the disc work piece bank(22) may also be replaced by A conveyer.

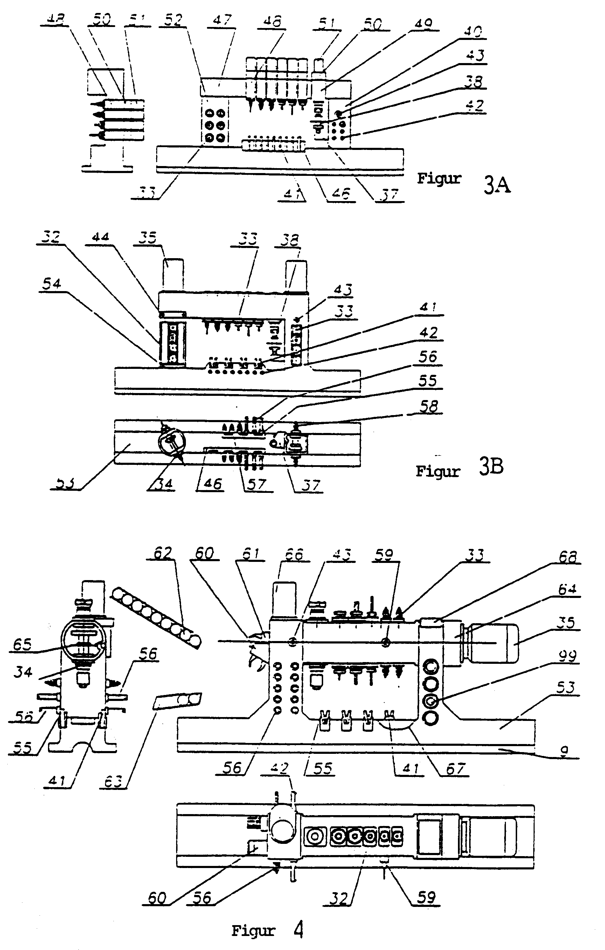

Similar to the tool magazine of that shown in Fig.2, Fig.3A, show a frame shaped tool magazine employing tool shaft-reducer-motor sets. The upper segment(47) of the tool magazine has one row of install hole, shaft-reducer-motor sets perpendicular to work piece axis inserted in them . The left segment(52) of the tool magazine is inserted one row of tool shaft-reducer-motor sets parallel to the Z axis. Each shaft-reducer-motor set comprises a standard shaft assemble(48) or (49) and reducing box (50), and a motor(51), they can be combined optionally according to different requirements in speed or torque or performance.Motor(51) can be electric or pneumatic or hydraulic.

Comparing with Fig.3A, in Fig.3B, a rotatable multi-shaft box(32) is added to the frame shaped tool magazine. The rotatable multi-shaft box is arranged one row of 4 driven tool shafts which can hold tools on both ends, so as to machine complex hole and surface oblique to work piece axis or spiral slot or helical gear etc. . The rotatable multi-shaft box(32) have coaxial rotary surfaces on both top and bottom that are fitted with the standing part of the frame shaped tool magazine, operating the fastening mechanism(44), the(32)can rotate about A axis parallel to the Y axis, or be locked at a prescribed angle. The rotary angle of multi-shaft box is indicated by a indicator(54). A Q axis encoder connected with control system is mounted on the tool shaft(34), so as to hob gear or spline.

The turning tool post(46)is arranged external turning tools(41). (42)is internal turning tools. (43)is a sensor for work piece measuring.

If a second spindle is used, a rear tool post (57)should be added on the other side of the tool magazine. The rear external turning tools (55) and rear internal turning tools(56) arranged on the rear tool post (57), is used to turn the work piece on the second spindle.The rear tool post(57)is shorter than front tool post(46),so as to permit the second spindle moving forth and clamping the work piece which is to be cut off on the main work spindle.

Both ends of each driven tool shaft arranged on the rotatable multi-shaft box and on the right segment paralleling to the workpiece axis have tool holding tapers or chucks(58) so as to machine the work piece on either workspindles.

(176)is measuring sensor for measuring the work piece on the second spindle.

Except common turning operations, the turning milling center shown in Fig. 1 and Fig.2 is able to turn taper screwthread with the interpolation of C',Z ,X axes: turn cam or relieve tooth with the interpolation of C', X axes. While driven tools are used, except common holes or surfaces machining, the turning milling center is able to mill end cam with the interpolation of C and Y(or X) axes; or mill cylindrical cam with the interpolation of C and Z axes; or engrave 3D curved surface with the interpolation of C, Y, Z axes; or mill spur gear or spline automatically when using C axis index function, or mill bevel gear when the C axis index function and the interpolation of Z, Y axes are combined. Utilizing the Q axis encoder and with synchronizing between Q and C axis, spur or helical gear or spline or worm gear can be hobbed. When Q, C and Y axes are synchronized with each other, worm gear can be hobbed by a single cutting tip.

The shortage of the tool magazine shown in Fig1-Fig3 is:

If the holes or surfaces to be machined are complicated, for example, three different-sized step screw hole perpendicular to the work piece axis are to be machined, 6 driven tools perpendicular to Z axis might be not enough. Besides, 3 to 4 groups of same driven tools may have to be held on the different multi-shaft boxes.

This shortage can be avoided by adding an A axis servodriver on the frame shaped tool magazine to drive the rotatable multi-shaft box. According the control program, the A axis servodriver rotates the multi-shaft box to any prescribed angle, so that each driven tools on the multi-shaft box can be put on the machining in defferent angles, and one controllable rotatable multi-shaft box can replace three different ones on the frame shaped tool magazine shown in Fig3B.

Additional, 2 rows or more of driven tool shafts can be arranged around the A axis of the rotatable multi-shaft box, thus either reducing the dimension of the rotatable multi-shaft box or doubling the available driven tools.

The upper segment of the frame shaped tool magazine shown in Fig.4 is a rotatable multi-shaft box(32),the both end of which are coaxial rotary surfaces, and fitted with the rotary surface of the standing part, so the multi-shaft box can rotate about the axis parallel to the X axis, and is driven by an A axis servodriver(66),or is locked at prescribed angle by a hydraulic(or electric) fastening mechanism. The rotatable multi-shaft box is arranged one row of 6 driven tool shafts(33),these shafts are parallel each other; both ends of the shafts have chucks, so as to hold 12 tools, each tool can machine the two ends of the workpiece paralleled or perpendicularly or obliquely to the workpiece axis.

If necessary, more driven tool shafts can be arranged on the rotatable multi-shaft box in rows perpendicular to the present shafts, thus at most 24 driven tools can be held, in other hand, the length of the multi-shaft box can be shorten.

For gear hobbing, at least one shaft(34) is mounted a Q axis encoder (or a pulse generator)(65), or coupled with the encoder through transmission chain.

The left segment of the frame shaped tool magazine is an axial fixed tool post, both its front and rear side can be arranged at most 10 axial fixed tools(42)and(56) respectively.The lower segment has two radial fixed tool posts, the front tool post can be arranged 8 external turning tools(41), the rear tool post can arranged 6 external turning tools(55). The fewer tools arrangement of the rear tool post is to permit the second spindle move forth and clamp the workpiece on the main spindle being to be cut off.

Measuring sensor(59)is equipped to measure the workpiece on either work spindle and then check the position data of cutting tools. The measuring sensor(43) mounted on the standing segment of the tool magazine has smaller measuring errors, but is not convenient to measure holes or sunken on the peripheral of the workpiece.

(99)is a bank for changeable fixture, used to place chucks, fixtures or screw nuts. The later is used to fasten an unfinished workpiece on the core shaft of the second spindle.

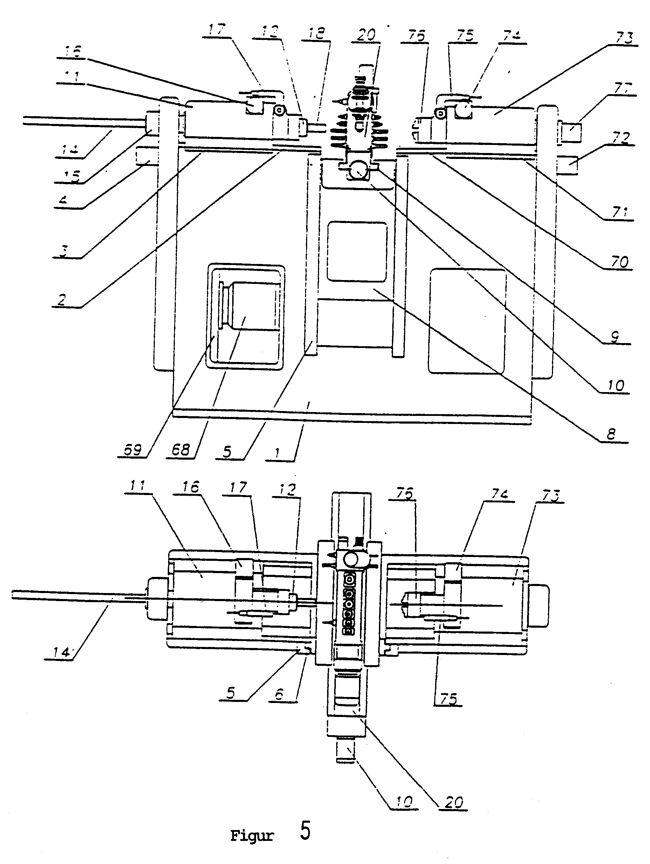

Fig5 shows a double spindle turning milling center employing a frame shaped tool magazine shown in Fig4.

As shown in Fig5, the bed(1) has a vertical Y axis guide rail(5) on the middle, and two horizontal coaxial Z, Z1 guide rails(2),(70) on the top of both side, the main headstock has guide surface(3), can slide on the Z guide rail(2), and is controlled by a Z axis servodriver (4) to move and locate. The second headstock has guide surface (71), can slide on the Z1 guide rail(70),and is controlled by a Z1 axis servodriver (72) to move and locate.

(20)is the frame shaped tool magazine, each segments of which are parallel to X and Y axis, the lower segment has X guide rail(9), can slide on the top X guide surface of slider (8), and controlled by X axis servodriver(10) to move or locate. The slider(8)has Y axis guide surface (6) perpendicular to the X slide surface on both sides, can slide vertically on the Y guide rail(5) of the bed, and controlled by Y axis servodriver(7)to move or locate.

The main workspindle(12) is supported in the main headstock with axis parallel to Z axis, is either driven by a main motor(68) while turning, or coupled with a C axis index servodriver(16)while drilling or milling, and is coupled with a C'axis encoder to define angular position or for screwthread cutting.

Alternatively, the main spindle can be controlled by a C axis close servo system comprising the main motor and the C'axis encoder without above independent C axis index servodriver(16).

A bar feeder is on the back of the main spindle for automatic loading.

Simillarly,The second spindle(76)is supported in the second headstock with axis paralleling to Z axis, and is driven by the same or another main motor while turning, or if necessary, coupled with a C1 axis index servodriver(74) for drilling or milling. The second spindle may also be coupled with a C1'axis encoder. If only turning need to be performed on the second spindle, the C1 axis index servodriver may be saved.

A Pusher(77) is on the back of the second spindle to push the finished workpiece out of the chuck(76).

Both headstocks are equipped rotatable tool measuring sensor(17) and(75) respectively.

Compared with above embodiments, this turning milling center has several times more cutting tools available than the former, can machine more complex work piece in one clamping, and needs less tool exchange or re-adjustment when workpiece is different.

The second spindle is suitable to the machining using bar or short blank, and has a high clamping accuracy for the unfinished workpiece on the main spindle.

Some workpiece must be located and clamped based on their finished cylindrical or taper or spline hole on the second spindle, in that time, a special core or fixture can be pre-machined or prepared on the second spindle, then the core is inserted into the finished hole of workpiece on the main spindle, next, with the workpiece, the core is twisted into the screw nut placed in the fixture bank of the tool magazine, and fastened.

Controlled by the program and according to the requirements of workpiece, all above process can be completed automatically.

Besides of rotary based workpieces, this turning milling center can also machine non-rotary workpiece contained by maximum dimensions of blank, such as small gear box, frame, die, blade etc..

The turning ability of this turning milling center is equal to a double spindle NC lathe, and the drilling and milling ability is equal to a 5 axis machining center, the measuring ability is equal to a 5 axis measuring machine.

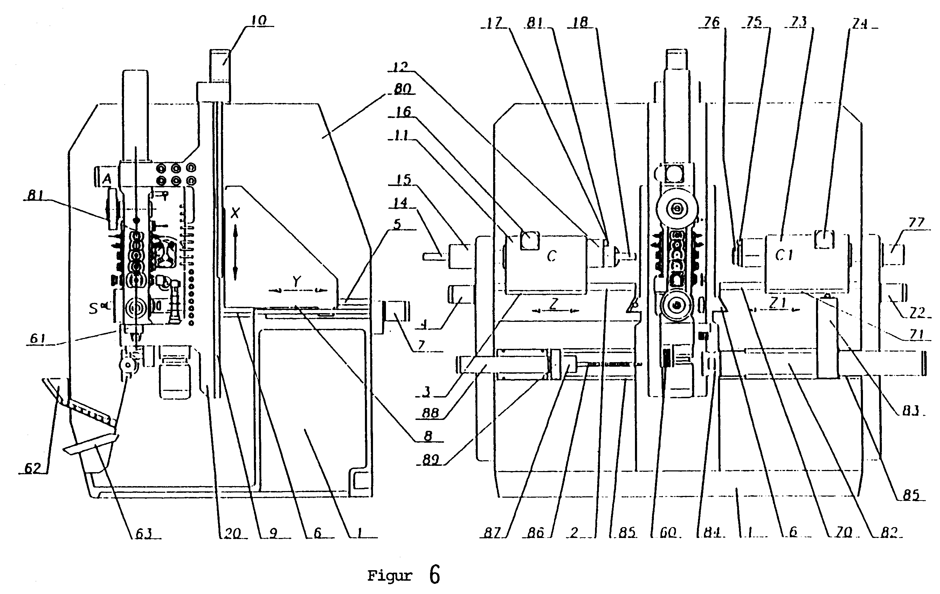

Fig.6 shows a multifunction machining center, besides of all turning, drilling, milling machining abilities of the above embodiments, it has additional functions like gear shaping, grinding, quenching, broaching, bevel gear planing etc. .

As shown in Fig.6, a frame shaped tool magazine (20)is placed vertically, it has X axis guide rails(9) on the back side of its right segment, can slide on the X axis guide surface on the front of slider(8), and is controlled by an X axis servodriver(10) to move or locate. The slider(8)has horizontal Y axis guide surface (6) on its bottom, can slide on the horizontal Y axis guide rail(5) on the middle top of the bed (1),and controlled by a Y axis servodriver(7) to move or locate. A main headstock(11) has guide surface(3) parallel to the main spindle axis on bottom, can slide on the horizontal Z guide rail(2) on the top of left side of the bed (1), a z axis servodriver(4) controls the main headstock to move or locate. A second headstock(73) has guide surface (71 )parallel to the second spindle axis on bottom, can slide on the horizontal Z1 guide rail(70) on the top of right side of the bed(1), a z1 axis servodriver(72) controls the second headstock to move or locate. On the front side of the bed(1), a broaching unit(82) is attached, (88) is a broach cycle mechanism. The whole working area is closed by a case (80).(62)is a blank feeder for short blank loading.(63)is outlet for finished workpiece slide out.

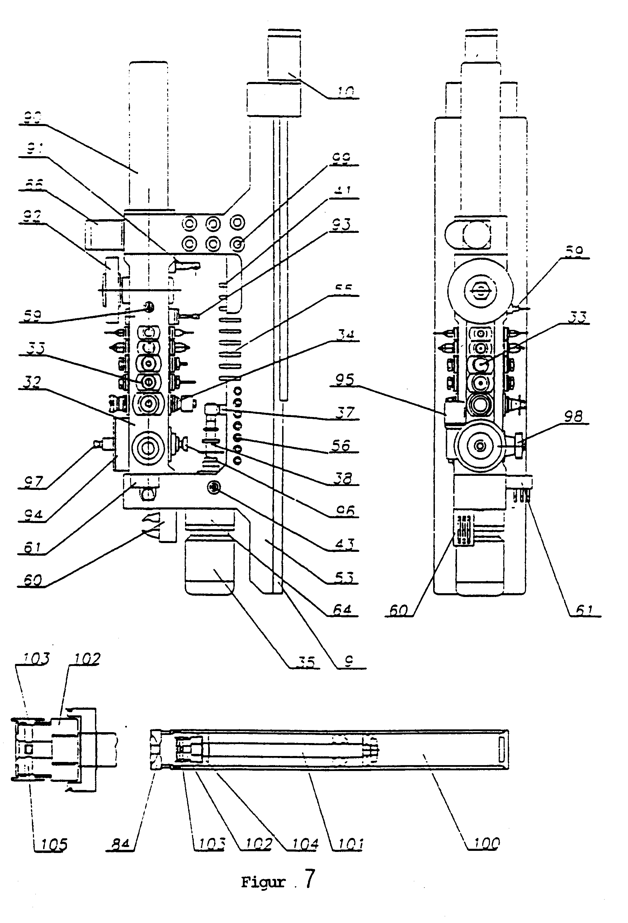

Both headstocks are equipped retractable(or rotatable) measuring sensor(17)and(75)respectively. One headstock is equipped a dresser(81) to dress large or small grinding wheel on the frame shaped tool magazine. The dresser will retracts to a position not influence machining. The retraction of the measuring sensor and the dresser is driven by an electric mechanism, or hydraulic cylinder or pneumatic cylinder. The outer body of the broaching unit(82) has a dovetail guide surface, can slide on the guide rail(85)on the front of the bed, the coupling mechanism(83) is used to couple the broaching unit(82) with the second headstock so that the axial position of the broaching unit can be controlled by Z1 servodriver. (100) is a hydraulic cylinder(shown in Fig.7C), (101)is a piston rod, (84)is a workpiece table,(102)is broach chuck,(103)is chuck shell, (87)is a broach holding chuck of the cycle mechanism.

The process of broaching is:

A. The broach chuck (102)is pushed by piston rod to the left end, and the chuck shell(103) is pressed by the internal surface of the workpiece table(84), allows jaws(105) of the chuck(102) move out radially, so as to permit the head of the broach(86) insert into or draw out the chuck hole freely.

B. The gripper (60) grasps a holed work piece from work spindle and moves to a position coaxial with the broaching unit.

C. Using the coupling mechanism (83) , the broaching unit is coupled with the second headstock, and is pushed by the headstock until the workpiece table(84) is to contact with workpiece.

D. The chuck(87)holding a broach moves right, until the head of the broach inserts through the hole of workpiece, and inserts into the hole of chuck(102).

E. The piston rod moves right ,the chuck shell (103) is pushed back by spring, the jaws(105) are pushed in to prevent the broach pulled out.The piston rod continues moving to right, until the broach cuts and passes through the work piece.

F. the gripper carry out the work piece.

G. The piston rod moves left and the broach chuck(102)pushes out the broach, until the tail of the broach inserts into the chuck(87)of the cycle mechanism, in the same time the chuck shell(103)is pressed by the internal surface of the workpiece table(84) ,to permit the broach head being drawn out.

H. The chuck(87) with the broach moves left to a starting position, thus the broaching cycle of a work piece is completed.

Fig.7 shows a frame shaped tool magazine used in embodiment 4. The rotatable multi-shaft box of this tool magazine is equipped a gear shaping unit(94)inside, which comprises a shell(110), slide rod(111), index worm gear pair (120)(121), and a forth-back mechanism.

Both ends of the slide rod(111) are made coaxial taper hole to hold two different shaping tools. Index worm gear pair (120)(121)is driven by an S axis servodriver(95), so that the shaping tool can be synchronized with the work spindle C axis.

This gear shaping unit can machine internal gear, step gear. Or can machine non-circle gear with the interpolation of Y, C, S axis, can shaping rack with the interpolation of S, X axis.

On this frame shaped tool magazine A quenching unit is equipped to harden workpiece after turning, milling and before grinding.

The quenching unit may be an inducing coil(169) connected with a high frequency power supply, or a laser nozzle(91).

The laser nozzle(91) is mounted on the rotatable multi-shaft box, the laser generator(90) may be settled on the frame shaped tool magazine if small enough, The power light is guided to the nozzle(91) by reflecting mirrors or other means. The laser nozzle can be attached a reflecting mirror to reflect lesar light in right angle so as to harden the internal surface of workpiece. Additionally, by means of modulating the power or frequency of the lesar generator, or exchanging different types of laser nozzle, the lesar unit can do more works like seam cutting, holing, welding, labeling, engraving etc.. The relative position between the lesar nozzle and workpiece is controlled by 5 axis, so complex surfaces can be machined.

On the rotatable multi-shaft box (32)of the tool magazine an external grinding unit(92)and an internal grinding unit(93)are equipped, they may be driven independently by electric motor or pneumatic motor.

The grinding wheel can be dressed automatically by a dresser(81) equipped on the headstock.

With the grinding units this machining center has the ability of a 5 axis grinding center, can grind different internal or external, cylindrical or taper surfaces or planes once a workpiece are clamped. Further more, with the interpolation of C, Y axis (or C1,Y axis), it can grind internal or external cam or end cam. With the interpolation of C, Z(or C1,Z1) axis, it can grind cylindrical cam . With the interpolation of X, Y axis, it can grind curved surface. When interpolating between X, Z axis and Y axis is synchronized,or interpolating between X, Y axis and Z axis are synchronized, it can perform planetary grinding of coordinate holes or curved surface.

Considering the grinding wheel can be dressed in straight or curved line, much more complicated surfaces can be grinded.

Indexing the workpiece(C or C1 axis), spline or spur gear can be grinded, and with the interpolation of C(or C1)axis and X axis, gears can be grinded in generation method, with the interpolation of C and Z axes(or C1 and Z1 axes), screwthread or helical gear can be grinded, when interpolating between C(or C1)axis and X axis, the tooth of disc tool can be relieving grinded, when interpolating between C, X and Z axis (or C1, X and Z1 axes), hobber or tapper can be relieving grinded.

A bevel gear planing or milling unit can be mounted on the rotatable multi-shaft box, to machine precise bevel gear with generation method.

A gripper (60)is used to carry a blank from blank feeder to main spindle, or carry an unfinished work piece from main spindle to broaching unit, or carry a broached work piece to main spindle or to second spindle and to clamp it on a fixture of the second spindle . A gripper (61) is used to carry finished work piece from spindle to outlet. (99) is a fixture bank on the frame shaped tool magazine, can store centers, fixtures, internal or external chucks and screw nuts(174) for fastening workpiece on the special core shaft of the second spindle.

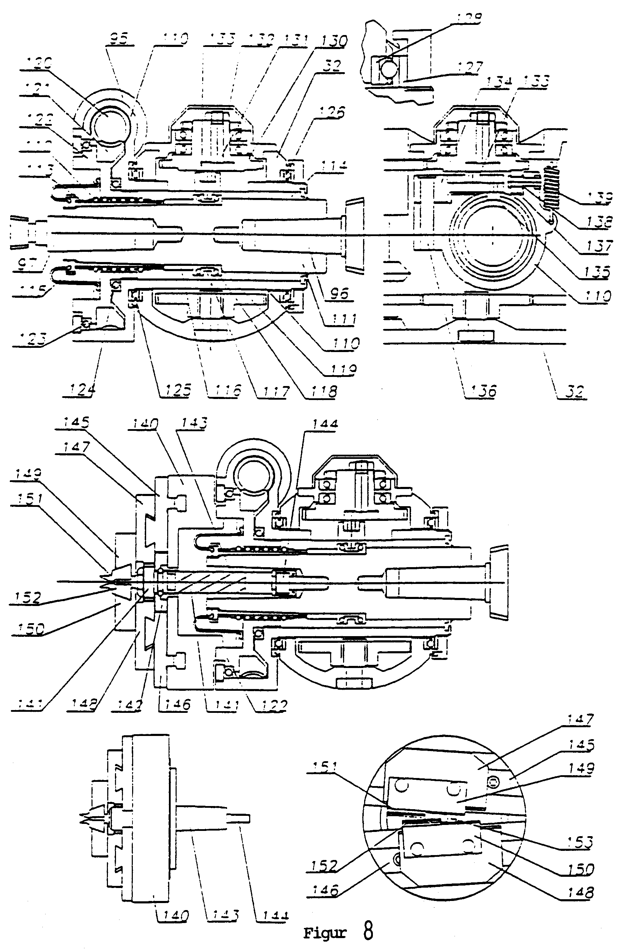

Fig.8 shows a mechanical embodiment of the gear shaping unit(94).

A shell(110) is supported in the rotatable multi-shaft box(32)by two linear bearings (125)(126) on both ends of the shell(110). On the opposite faces of the internal and the external rings(127)(128)of the bearings, there are rolling grooves paralleled each other, rolling balls are between then. So that the gear shaping unit can slide gaplessly inside the rotatable multi-shaft box (32). The right half of the sliding rod(111)can slide and rotate in the sliding sleeve(114), and the left half is coupled with an index worm gear hub(122) through a ball spline(112).A spline sleeve(113) is fixed on the sliding rod(111)with a coaxial taper, adjust the screw nut(115) and the sleeve(116) to swell spline sleeve, the gap of ball spline can be eliminated.The index worm screw (120)is driven by an S axis servo motor(95). The rolling ring(117)is supported by ball (118) on the sliding rod(111)and forms a thrust bearing, the swinging arm (134) can swing around a pivot(136)on one end, and has a pin(135) on its other end inserted in the grove of the rolling ring(117). The gear shaft(130)is meshed with the power transmission system inside the rotatable multi-shaft box, a shaft with an eccentric pin(131)is inserted in the eccentric hole of the gear shaft(130), the pin of the shaft(131)is inserted in a slide block(133) that slides in the straight slot of the swinging arm(134).

The shaft(131) is rotatable when the screw nut (132) loosed, so the stroke of the slide rod(111) can be adjusted. Clutch tooth is made on the back of the lower end disc of the shaft(131) and on the sunken surface of shaft(130),so that shaft(131)can be fastened steadily. A small bearing(137)is on shell(110). A spring(139) forces the shell(110) up, and presses bearing(137)to the cam on the lower end of gear shaft(130).When gear shaft(130) rotates, first slide rod (111)starts its positive stroke, the cam push down shell(110) a regular distance(0.5-1.0mm), when slide rod(111)starts opposite stroke, the cam surface moves upper, spring (139)draw back the shell (110), so as to avoid the shaping tool contact with workpiece in opposite stroke. if a shaping tool is held in other end of the sliding rod(111), the gear shaft(130) must run on opposite direction.

The simplest practical method of bevel gear planing is utilizing the index servo mechanism of the gear shaping unit, that is, attach a bevel gear planning attachment on the gear shaping unit to machine bevel gear.

As shown in Fig.8, (140)is a swivel table of the bevel gear shaping attachment ,it can be fixed on the outer end of the worm gear hub(122) and is mounted a left guide rail(145) and a right guide rail (146),a left and a right slide block (147),(148) can slide on the left and right guide rails respectively. Left and right tool posts (149),(150) holding left and right planing tools(151), (152) are fastened on the left and right slide block respectively. The inner sides of the left and right slide block have racks, meshed with a gear(141). (141)is one end supported by a bearing(142) on the center of swivel table (140), and other end twisted into a screw sleeve(143) with long pitch screw, the screw sleeve(143) is fastened in the taper hole of the slide rod(111).

When the slide rod(111) runs forth and back, the screw sleeve(143) forces the center gear(141) rotate forth and back, and the gear(141) via the meshed racks, pushes the left and the right slide block(147), (148) and their planing tools(151),(152) to move forth and back oppositly, so as to cut tooth.

When bevel gear is planing, the movement of gear shaping unit for avoiding contact between tool and workpiece in opposite stroke must be stopped, for this reason, a push rod is added in the shell of the multi-shaft box(32), (not shown in the Fig). Pushing this rod by hand or by workspindie , the inclined face of the rod will push the gear shaping unit down to leave the cam(130), and to be fixed.

The second practical method of bevel gear cutting is employed a sharing swivel table on the rotatable multi-shaft box(32),the sharing swivel table is driven to swing by a T axis index servodriver, with a power supply shaft in the center. A bevel gear planing attachment or a spiral bevel gear milling attachment can be attached on the sharing swivel table and obtain cutting power from the power supply shaft.

The third practical method of bevel gear cutting is making a sharing mounting surface outside the rotatable multi-shaft box, and a power supply shaft centering the mounting surface, a bevel gear planing unit or a spiral bevel gear milling unit(165) is attached on the mounting surface and obtain cutting power from the power supply shaft. They have T axis index servodriver respectively for driving their swivel table swinging. In the second and the third method, the cutter may also be driven by an independent power driver equipped on the attachments or units, the power driver may be electric, or hydraulic or pneumatic.

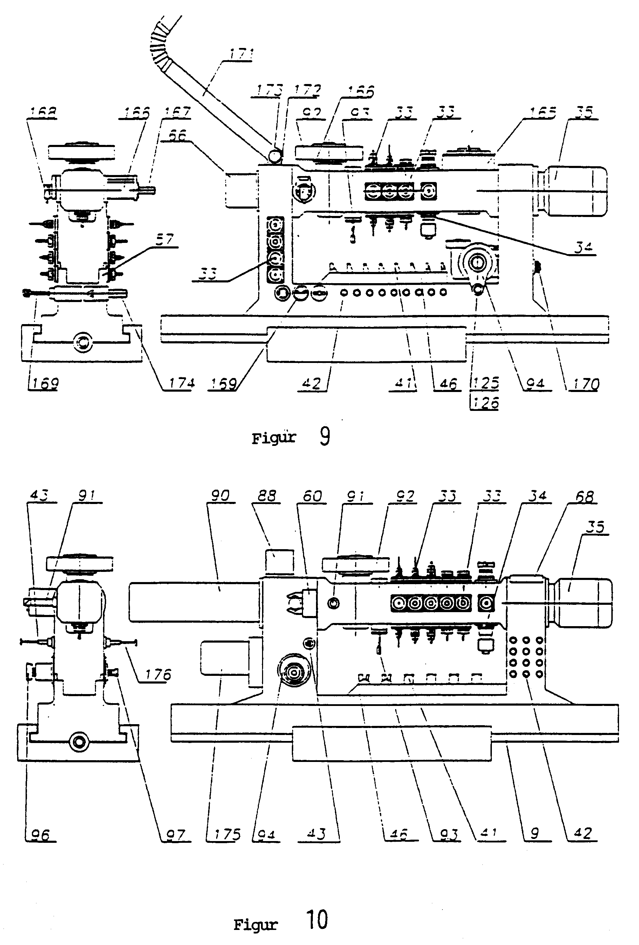

Fig9 and Fig10 show two alternatives of the frame shaped tool magazine shown in Fig.7. As shown in fig9, the rotatable multi-shaft box is arranged 4 rows of 16 driven tool shafts perpendicularly , (166)is a slotting unit, Both end of the sliding rod of which can be held tools, (168) is a planing tool held in tool block. The tool block can rotate and be fastened at any angle. Using planing tools, planes or curved surfaces in arbitrary angles can be machined on the work piece.

(167)is a slotting tool, can slot inside the cylindrical or taper hole, or slot internal spline.

(165)is a bevel gear planing unit or a spiral bevel gear milling unit,its swivel table is driven by a T axis index servodriver, and cutting tools are driven by the transmission system inside the rotatable multi-shaft box.

(94) is a gear shaping unit, its shell is supported by bearing (125) (126) inside the standing part of the frame shaped tool magazine, the movement for avoiding contact between tool and workpiece in opposite stroke is formed by swing of the gear shaping unit(94)on the bearings. (170)is a stroke adjuster of the gear shaping unit.

(169) is a high frequency quenching coil.

(171)is a bendable blank feeder, its upper end is fixed, its outlet(173) at lower end is mounted on the frame shaped tool magazine, a pusher(172)is at the back of the outlet(173) for pushing out the blank.

(41) is paralleled arranged obliquely standing prism turning tool.

As shown in Fig.10, the rotatable multi-shaft box of the frame shaped tool magazine is arranged 4 rows of 24 driven tool shaft, and a laser nozzle(91), without bevel gear cutting unit. The laser generator(90) is settled on the standing part of the frame shaped tool magazine.

A gear shaping unit(94)is supported by bearings inside the standing segment of the tool magazine, to prevent pollution into the gear shaping unit. The supporting bearings are eccentric to the sliding rod, so that the movement for avoiding contact between tool and workpiece in opposite stroke can be formed by swing of the gear shaping unit on the bearings. The stroking of the cutter and the swing of the gear shaping unit(94) are driven by motor(177). The turning tools(41)is arranged in the "V" like back to back pairs.

According to the different requirements of the industrial practice, the above embodiment can be alternate to obtain different composition. For example, as shown in Fig.7, all driven tool shaft and a gear shaping unit are arranged on the rotatable multi-shaft box of the frame shaped tool magazine, by the aid of A axis control, all driven tools and two gear shaping tools can be moved to different position and angles to machine the workpiece on two spindles, so each cutting tool can fully utilized, but considering on the other side, the freedom of A axis can reduce the position accuracy of the tools, so for high precision workpiece,it is considerable placing the gear shaping unit and adding driven tool shafts parallel or perpendicular to the Z axis on the standing parts of the tool magazine, even employing two or more gear shaping unit to complete internal and external gears or gears in different modules in one workpiece.

For arranging more tools and working units, the frame shaped tool magazine can be in the shape of '目', or '目'.

The frame shaped tool magazine can be horizontal, or vertical, or oblique in the machine tool.

Long workpiece should be supported by a center held in a tailstock when machining, so it is reasonable for the frame shaped tool magazine to slide on the bed along Z axis.

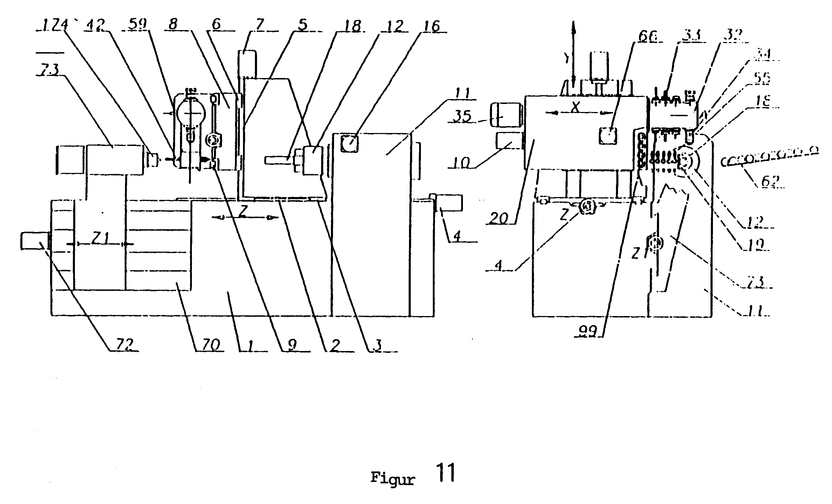

Fig.11 shows a turning milling center for long workpiece.

The frame shaped tool magazine(20)slides through X-Y cross slider(8) and Y-Z slider(163)on the Z guide rail of the bed, so as to machine a longer workpiece.

As shown in Figs, the headstock (11) is fixed on the bed, (16)is C axis servodriver of work spindle(12), the slider(163) is controlled by the Z axis servodriver to slide on the Z axis guide rail(2) of the bed, the slider(163) has a vertical Y axis guide rail(5) perpendicular to the Z axis. The X-Y cross slider(8)is controlled by Y axis servodriver(7) to slide vertically on the Y guide rail(5) of the slider(163).The frame shaped tool magazine(20) has horizontal X axis guide rail(9)on the inner side and can slide on the guide surface of the X-Y cross slider(8),and is controlled by X axis servodriver(10), the tailstock(73)has guide surface on inner side and can slide on the Z1 guide rail(70)of the bed, and controlled by Z1 axis servodriver(72)to move and locate.

The frame shaped tool magazine(20)is formed in shape of "U" for convenience of long workpiece loading. The rotatable multi-shaft box (32)is arranged 8 driven tools including hobber. If necessary, 16 driven tools can be held. All driven tools are driven by motor(35).

The rotatable multi-shaft box(32) is driven by an A axis servodriver (66)to rotate. (99)is fixture bank for workspindle, it is one row of holes on the segment of the frame shaped tool magazine, can be placed with centers, chucks and exchangeable fixtures for internal or external clamping, so that the work spindle can change fixtures or centers automatically during machining process.

If the second end of workpiece need machined, the tailstock should be replaced by a second headstock and a second spindle.

If the second end of the workpiece needs only turning, the C1 axis index servodriver can be saved.

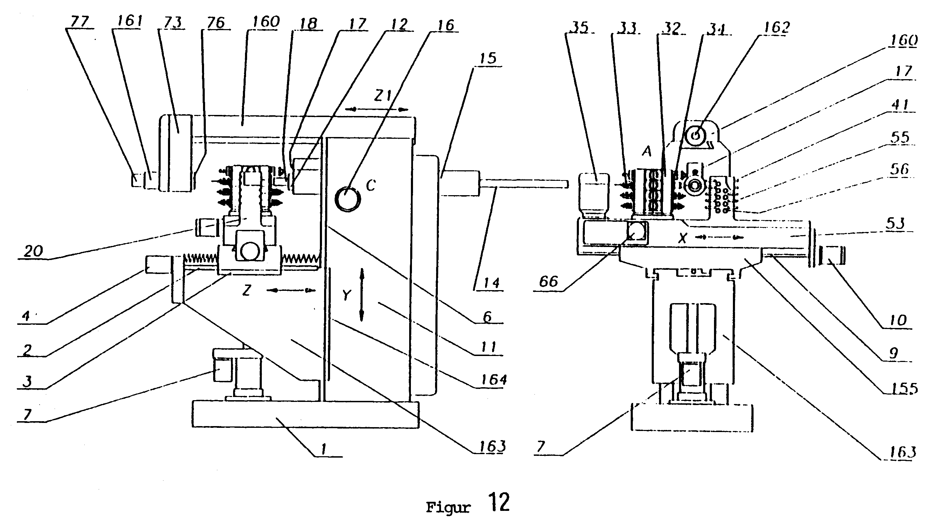

Fig12 shows a simple double spindle turning milling center.

As shown in the Fig12, the headstock(11) and the bed are combined to one, and has vertical Y axis guide rail(6) on the front, a Z-Y slider (163) has vertical Y axis guide surface and horizontal Z axis guide rail orthogonally ,can slide vertically on the Y axis guide rail of the bed, and is controlled by a Y axis servodriver(7) to move or locate, a cross slider(155) has a Z axis guide surface(3) on the bottom and a X axis guide surface on the top orthogonally, can slide on the Z axis guide rail of the slider (163) and is controlled by a Z axis servodriver(4)to move or locate, a frame shaped tool magazine(20) has an X axis guide rail on bottom, can slide on the X axis guide surface of the cross slider(155)and is controlled by an X axis servodriver(10) to move or locate. The headstock (11) has a Z1 guide rail parallel to the spindle axis and the Z guide rail on the top. A ram(160) sliding on the Z1 guide rail, a second spindle(76)is supported in a second headstock(73) attached on the front end of the ram, the second spindle may be rigidly transmitted from the main work spindle through gear chain and shafts, so as to save the C1 axis servodriver and the second main motor.

The ram can be driven by a Z1 axis servodriver to move or locate, or pushed by a simple pushing mechanism, this pushing mechanism either pushes the ram out to the machining position, or pull the ram in to the position where the second spindle can clamp the workpiece on the main spindle.

(16) is C axis index servodriver for the main spindle. (15) is a bar feeder.

In order to shorten the distance from second spindle axis to the bottom of the ram to increase the rigidity of the second spindle, the frame shaped tool magazine(20)is formed in the shape of "U", a rotatable multi-shaft box(32) is on the left of the tool magazine(20), arranged 4 rows of 16 driven tool shafts perpendicularly, and driven by an A axis servodriver(66). Each driven tool shafts are driven by motor(35).The right segment of the tool magazine is vertically arranged external turning tools and internal turning tools, the front external turning tools(41) are arranged 4 at the left, and 3 at the right, the rear external turning tools(55) are arranged 4 at the left and 2 at the right, the internal turning tools are arranged 8 at the front and at the rear.

(161)is a hydraulic cylinder for driving the chuck of the second spindle. (77) is a pushing cylinder for pushing the work piece out the chuck.

Each embodiment mentioned above are suitable to relative small workpiece, generally the blank is not larger than 100mm in diameter. and 200mm in length. For larger workpiece machining, a composition of frame shaped tool magazine fixed and the headstock moving in the X, Y, Z direction is considerable.

All the above embodiments can perform automatically machining on both batch or single workpiece controlled by computer program.

For the convenience of single complex work piece machining, a computer aided manual operation function should be added into the software.

The preferred embodiment is the multifunction machining center shown in Fig.6.

Industrial Applicability:

The advantages of the present invention are:

1. Integrate the prior turning center, machining center, delivering robots, quenching machine, broaching, grinding machine, gear making machine etc. in one machine, is a single machine CIMS.

2.Without independent tool exchange mechanism, enough tools can be used to do different machining, and without expensive loading robot, the blank loading and finished workpiece unloading can be completed automatically, and having small size, simple structure and low cost. Compared with a CIMS which comprises several machining centers and others, the present invention can only once do one machining subsequently, while a CIMS can do different machining in each machining center in the same time, however consider the troubles caused by the repeatedly loading, unloading, delivering, relocating and reclamping of unfinished workpiece, the advantages of the present invention to multi-variety small batch machining is obvious.

**Claims**

1.  A machine tool comprising a bed, a work spindle holding work piece and being driven to rotate , a headstock supporting said work spindle, a C axis index servodriver for said work spindle,a frame shaped tool magazine holding tools and cutting units,and Z axis, X axis and Y axis guide pairs with feed servodrivers to perform relative movements between said headstock and said tool magazine, what is claimed is:

    At least one of following rotary tool shaft is arranged on said frame shaped tool magazine: A, At least one row of driven tool shafts is arranged on the segment of said frame shaped tool magazine, which is rotatable about an axis parallel to X or Y axis, and each row has at least two driven tool shafts, which are parallel each other and aligned along the rotary axis of the segment.
    B, At least one row of driven tool shafts perpendicular to the Z axis and at least one group of driven tool shafts parallel to the Z axis are arranged on the standing segment of said frame shaped tool magazine ,each row or group has at least two driven tool shafts which are parallel each other.The driven tool shafts perpendicular to Z axis are aligned along the X or Y axis, and the driven tool shafts parallel to the Z axis are aligned along the X or Y axis in one row or rows or are arranged in X-Y plane.
    C, The combination of A and B items.

2.  The machine tool according to claim 1,wherein said frame shaped tool magazine has a tool post, on which at least one row of radial fixed tools(external turning tool or planing tool) and at least one group of axial fixed tools(internal turning, drilling, tapping, reaming tools or slotting tool) each row or group has at least two tools, the radial fixed tools are aligned along X or Y axis, the axial fixed tools are aligned along X or Y axis in one row or rows or are arranged in X-Y plane.

3.  The machine tool according to claim 1, wherein at least one rotatable segment with driven tool shafts(multishaft box)is coupled with the standing part of the frame shaped tool magazine via rotary surfaces, so as to rotate, the rotary axis of which is parallel to the X axis or Y axis, and the frame shaped tool magazine is equipped one of the following mechanisms: A, An A axis servodriver(66) for rotating or locating the multishaft box(32), and a fastening mechanism(68) for locking the multishaft box. B, An angle indicator(54) and a hand operated fastening mechanism(44).

4.  The machine tool according to claim 1, wherein at least one driven tool shaft in the said tool magazine is mounted a Q axis encoder(65), or is coupled with a Q axis encoder(65).

5.  The machine tool according to claim 1, wherein installing holes are made on the segment of said frame shaped tool magazine, in which shaft-reducer-motor sets are mounted, the shaft-reducer-motor set is composed of a shaft assemble(49)or(49), a reducer(50), and a motor(51).the motor may be electric or pneumatic or hydraulic.

6.  The machine tool according to claim 1 or any claims below claim 1, wherein at least one of following working units is equipped on said tool magazine :

    A. bearing holder(37) for long arbor supporting,
    B. shaft(92)or(93) for holding grinding wheel,
    C. loading or unloading gripper;
    D. laser nozzle(91);
    E. high frequency inducing quenching coil (169);
    F. fixture bank(99) for storing exchangeable fixture or clamping parts for work spindle ;
    G. outlet (173) of a blank loader(171);
    H. slotting unit(166);
    I. gear shaping unit(94),in which a S axis servodriver(95) is employed to rotate gear shaping cutter;
    J. workpiece measuring sensor, the mounting position of which is: A,a workpiece measuring sensor(59)is mounted on the rotatable multishaft box. B,a workpiece measuring sensor(43) is mounted on the standing part(53)of the tool magazine facing the main workspindle, C,a workpiece measuring sensor(176) is mounted on the standing part (53)of the tool magazine facing the second workspindle.

7.  The machine tool according to claim 1 or any claims below claim 1, wherein a second headstock with a second work spindle which is coaxial to the present work spindle is settled on the other side of said frame shaped tool magazine opposite to the present headstock, and by one of the following means:

(A)the second headstock slides directly or indirectly on the Z guide rail(2) or Z1 guide rail which is parallel to the Z guide rail;

(B)the second headstock is attached on the front end of a ram (160) which slides on the Z1 guide rail, this Z1 guide rail is on the top of the present headstock and is parallel to the Z guide rail.

8. The machine tool according to claim 1 or any claims below claim 1, wherein said headstock is equipped with one of the following rotatable or retractable tools: A. sensor(17) for cutting tool measuring, B. grinding wheel dresser(81) , C.combination of A and B.

9. The machine tool according to claim 1 or any claims below claim 1, wherein a broaching unit as well a broach cycle mechanism is attached on said bed or said tool magazine.

10. The machine tool according to claim 1 or 6, wherein the two end of slide rod(111)of said gear shaping unit can hold shaping tools.

11. The machine tool according to claim 1 or 6, wherein the slide rod (111)in said gear shaping unit is coupled with the index worm gear hub (122)through a ball spline,the contact surface between external spline sleeve(113)and the slide rod(111), or between internal spline sleeve and the worm gear hub(122)is taper.

12. The machine tool according to claim 1 or 6, wherein the shell(110) of said gear shaping unit is supported inside the shell of said frame shaped tool magazine by bearings(125)(126),the cylindrical surface to mount bearings is eccentric to the slide rod(111) axis .

13. The machine tool according to claim 1, wherein said rotatable part of said tool magazine is equipped bevel gear cutting unit, it is formed in one of the following method:

A. a bevel gear planing unit or a spiral bevel gear milling unit (165) is attached on a sharing mounting surface outside said rotatable part of said tool magazine, and obtain cutting power from a power supply shaft centering the mounting surface, or from a independet power source, a T axis indexing servodriver is equipped to swing the swivel table of the unit.

B. a sharing swivel table driven by a T axis indexing servodriver mounted on said rotatable part of said tool magazine, an attachment for bevel gear planing or spiral bevel gear milling is attached on the sharing swivel table , and obtains cutting power from a power supply shaft centering the swivel table, or from a independet power source. The said independent power source mentioned in item A and B may be a hydraulic motor, or a pneumatic motor, or a electric motor.

C. a bevel gear planing attachment(140) - (153) is attached on the worm gear hub(122) of the gear shaping unit(94), left and right slide blocks holding cutters with their racks meshed with a gear(141), the long pitch screw of the right end of gear(141) is inserted into the hole of the screw sleeve(143), the screw sleeve(143) is mounted in the left end taper hole of the sliding rod(111).

14. The machine tool according to claim 6, wherein said gripper is mounted on a rotating mechanism(21).

15. The machine tool according to claim 6, wherein said gripper comprises at least two pairs of jaws which move oppositely and syncromeshly, each pair are driven respectively by power.

16. The machine tool according to claim 1, wherein said tool magazine comprises one segment or several segments which connect each other perpendicularly to form a frame,the frame may be in the shape of I, L, U, 口, 日, 目 and so on.

Figur 1

Figur 2

Figur 3A

Figur 3B

Figur 4

Figur 5

Figur 6

Figur 7

Figur 8

Figur 9

Figur 10

19

Figur 11

Figur 12

EP 0 810 048 A1

## INTERNATIONAL SEARCH REPORT

| International application No. |
|---|
| PCT/CN 96/00011 |

### A. CLASSIFICATION OF SUBJECT MATTER

IPC(6): B23B 11/00

According to International Patent Classification (IPC) or to both national classification and IPC

### B. FIELDS SEARCHED

Minimum documentation searched (classification system followed by classification symbols)

IPC: B23B 11/00, B23Q 41/00

Documentation searched other than minimum documentation to the extent that such documents are included in the fields searched

Chinese patents and patent applications for inventions or utility models published since 1985

Electronic data base consulted during the international search (name of data base and, where practicable, search terms used)

### C. DOCUMENTENTS CONSIDERED TO BE RELEVANT

| Category* | Citation of document, with indication, where appropriate, of the relevant passages | Relevant to claim No. |
|---|---|---|
| X | US, A, 3, 710, 466(David T. N. Williamson et al) | 1,2 |
| Y | 16 Jan. 1973(entire document) | 3—16 |
| Y | US, A, 4, 949, 443(Tatsuhiko Saruwatari et al) 21 Aug. 1990(eutire documont) | 1,2,3,5 |
| A | EP, A, 0259637(Tsugami Corporation) 16 Mar. 1988(entire document) | 6,14,15 |

☐ Further documents are listed in the continuation of Box C.       ☒ See patent family annex.

| \* Special categories of cited documents:<br>"A" document defining the general state of the art which is not considered to be of particular relevance<br>"E" earlier document but published on or after the international filing date<br>"L" document which may throw doubts on priority claims(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search | Date of mailing of the international search report |
|---|---|
| 28 April 1996 | 6 May 1996   (06.05.96) |

| Name and mailing address of the ISA/ | Authorized officer |
|---|---|
| Chinese Patent Office, 6 Xitucheng Rd. Jimen Bridge, Haidian District, 100088 Beijing, China | WANG Kai |
| Facsimile No.   (86—1)62019451 | Telephone No. (86—10)62093725 |

Form PCT/ISA/210(second sheet)(July 1992)